# FASCICULE DE BREVET EUROPEEN

(11) **EP 0 647 559 B1**
(45) Date de publication et mention de la délivrance du brevet: **18.12.1996**
(21) Numéro de dépôt: 94402233.4
(22) Date de dépôt: 05.10.1994
(51) Int. Cl.: B64G 1/42, B64G 1/50, H01M 2/10

(54) **Satellite géostationnaire à accumulateurs d'énergie électrique**
Geostationärer Satellit mit elektrischen Akkumulatorenzellen
Geostationary satellite with electrical storage cells

(30) Priorité: 08.10.1993 FR 9312035
(43) Date de publication de la demande: 12.04.1995
(73) Titulaire: MATRA MARCONI SPACE FRANCE, F-75116 Paris (FR)
(72) Inventeur: Faisant, Pierre Philippe, F-31120 Portet Sur Garonne (FR)
(74) Mandataire: Fort, Jacques

(56) Documents cités:
- EP-A- 0 512 906
- US-A- 3 830 663
- US-A- 4 580 748
- US-A- 5 310 141
- JOURNAL OF POWER SOURCES, vol.18, no.2-3, Septembre 1986, LAUSANNE CH pages 245 - 258 METCALFE, J. 'LIGHTWEIGHT, DIRECT-RADIATING NICKEL-HYDROGEN BATTERIES'
- 21ST INTERSOCIETY ENERGY CONVERSION ENGINEERING CONFERENCE, vol.3, 29 Août 1986, SAN DIEGO, CALIFORNIA, USA pages 1541 - 1546 WONG ET AL. 'INTELSAT VI NICKEL-HYDROGEN BATTERY'

## Description

La présente invention concerne les satellites ayant une charge utile, destinés à être stabilisés à poste autour de trois axes sur une orbite géostationnaire, comportant une structure ayant des parois faisant face au Nord et au Sud lorsque le satellite est à poste et portant une batterie d'accumulateurs de capacité importante.

Il est nécessaire, sur la plupart des satellites, de placer une ou plusieurs batteries d'accumulateurs permettant de fournir la puissance utile nécessaire à la charge utile et aux organes de stabilisation du satellite lorsque les générateurs normaux sont inopérants, ce qui est par exemple le cas lorsque le satellite passe dans l'ombre portée de la terre.

On utilise à ce jour plusieurs modes de montage de ces accumulateurs, qui sont des composants lourds, sur la structure du satellite. Ces modes de montage doivent tenir compte de contraintes. En particulier, les accumulateurs n'ont un fonctionnement satisfaisant que dans une plage de température déterminée. Pour respecter cette nécessité on a déjà relié les accumulateurs à des radiateurs thermiques et on les a équipés de moyens électriques de réchauffage, commandés par des circuits de régulation.

Diverses dispositions pratiques ont été utilisées. Une solution courante consiste à fractionner les accumulateurs en deux batteries, ayant chacune deux blocs indépendants sur la face interne de la même paroi (Nord ou Sud) et dont les radiateurs sont portés par cette paroi. Les deux blocs sont placés à proximité l'un de la face Est, l'autre de la face Ouest de la structure.

Cette disposition présente des inconvénients. Chaque bloc étant indépendant, il doit être relié à l'autre bloc de la même batterie par des conducteurs portés par la structure du satellite, de sorte que les deux blocs ne peuvent être reliés qu'une fois montés sur le satellite. Le montage et le démontage des batteries nécessite le démontage d'autres éléments du satellite tels que le générateur solaire, ce qui rend cette opération complexe et risquée, notamment avant mise en place sur le lanceur. La surface du radiateur et la puissance des moyens de contrôle thermique doivent être suffisantes pour maintenir chaque bloc en dessous de la température limite haute lorsque le radiateur est au soleil, au-dessus de la température limite basse lorsque le radiateur est à l'ombre. Cela exige de donner une surface importante aux radiateurs (donc d'encombrer les parois Nord et Sud alors qu'elles doivent porter d'autres éléments dissipatifs) et de prévoir une puissance de réchauffage électrique élevée. Les batteries étant concentrées contre les parois Nord et Sud, elles occupent une surface importante, réduisant celle qui reste disponible pour d'autres équipements électroniques dissipatifs, tels que des tubes à onde progressive sur un satellite de télécommunication.

La présente invention vise notamment à fournir un satellite du genre ci-dessus défini répondant mieux que ceux antérieurement connus aux exigences de la pratique. Elle vise plus particulièrement à fournir un satellite dont les accumulateurs sont montés de façon à ne nécessiter qu'une surface radiative et une puissance de réchauffage plus faibles que dans la disposition mentionnée plus haut. Dans ce but, l'invention propose notamment un satellite caractérisé en ce que la batterie (ou chaque batterie) d'accumulateurs est constituée de cellules montées sur un châssis ayant une semelle orientée Nord-Sud, solidaire mécaniquement de flancs faisant face au Nord et au Sud lorsque le satellite est à poste, lesdits flancs portant ou constituant des radiateurs thermiques, reliés thermiquement entre eux et avec les cellules.

Grâce à cette disposition, les besoins en surface radiative pour évacuer une dissipation thermique donnée sont réduits, du fait qu'il y a toujours un des radiateurs qui est à l'ombre ; cela permet de diminuer significativement les besoins en puissance de réchauffage, en particulier lors des solstices, le radiateur qui est à l'ombre bénéficiant de l'ensoleillement du radiateur opposé.

Les radiateurs peuvent notamment être reliés entre eux et aux cellules par des caloducs ayant une constitution classique, comparable à celle utilisée par exemple pour relier des éléments actifs placés à l'intérieur du satellite à des radiateurs externes. Les éléments de réchauffage par l'énergie électrique peuvent être de constitution classique, mais en nombre plus réduit que dans les dispositions antérieures.

L'invention offre également la possibilité de faciliter le montage et le démontage d'une batterie. Pour cela, suivant une disposition avantageusement utilisable, en liaison avec les précédentes, mais pouvant l'être indépendamment, le châssis et les cellules constituent un module manipulable en bloc, dont les flancs sont munis de moyens de fixation sur les parois Nord et Sud et dont la semelle est munie de moyens de fixation sur un plateau qui appartient à la structure et qui est placé dans un plan contenant les directions Nord-Sud et Est-Ouest. Le montage du module n'implique alors que des opérations mécaniques simples et l'enfichage de connecteurs électriques portés par le module sur des connecteurs électriques terminant des câbles montés sur la structure du satellite.

L'invention sera mieux comprise à la lecture de la description qui suit de modes particuliers de réalisation de l'invention, donnés à titre d'exemples non-limitatifs. La description se réfère aux dessins qui l'accompagnent dans lesquels :
- la figure 1 est un schéma de principe montrant l'aménagement général d'un satellite géostationnaire de télécommunication et un montage possible de batteries, conformément à un mode particulier de mise en oeuvre de l'invention ;
- la figure 2 montre schématiquement, en perspective, une constitution possible de la structure d'un satellite pouvant être équipé de batteries, conformément à un mode particulier de mise en oeuvre de l'invention ;
- la figure 3 est une vue en perspective d'un module utilisable sur la structure de la figure 2, vu dans la direction +X ;
- la figure 4 montre une fraction d'un satellite comportant des modules du genre montré en figure 3, vu dans la direction Z ;
- la figure 5 montre un demi-module, vu dans la direction X ;
- la figure 6 montre un module et une fraction de la structure du satellite, dans la direction -Y, c'est-à-dire suivant les flèches VI-VI de la figure 4 ;
- la figure 7, similaire à la figure 3, est une vue, en perspective éclatée, d'un module suivant un autre mode de réalisation ; et
- les figures 8 et 9, respectivement similaires aux figures 4 et 6, correspondent au mode de réalisation de la figure 7.

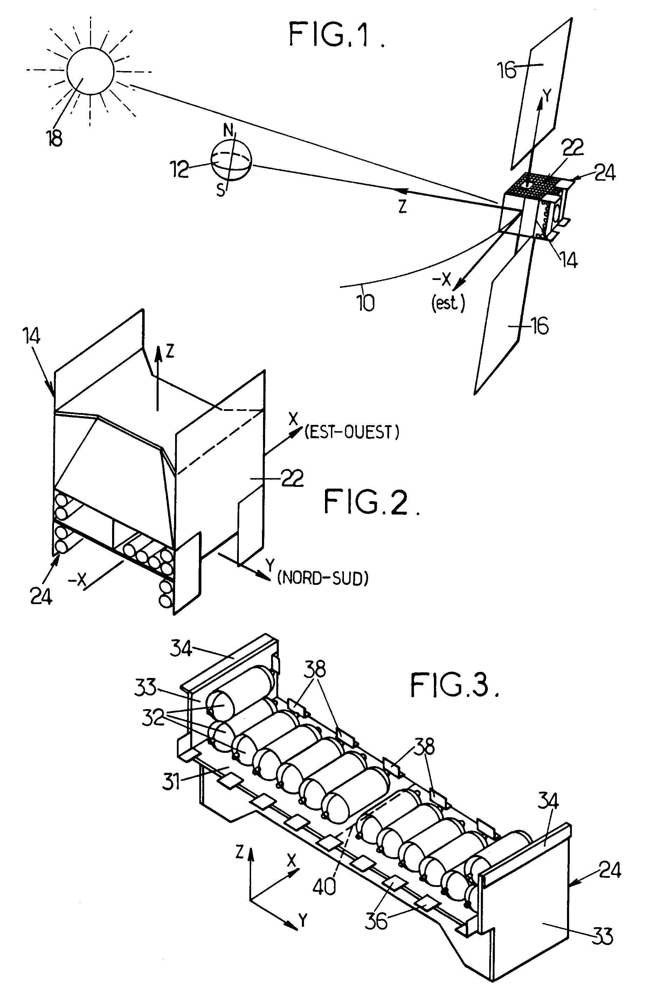

Le satellite dont la constitution générale est montrée en figure 1 est destiné à être placé sur une orbite équatoriale géostationnaire 10 autour de la terre 12. Il est stabilisé suivant l'axe X (axe Est-Ouest ou axe de roulis), suivant l'axe Y (axe Nord-Sud ou axe de tangage) et suivant l'axe Z (axe de lacet). Il comporte une structure 14 sur laquelle des panneaux solaires 16 peuvent tourner autour de l'axe Y, parallèle à l'axe de rotation de la terre, de façon à rester orienté vers le soleil 18.

La structure 14 peut avoir la constitution générale montrée en figure 2. Elle a alors une plate-forme sur laquelle sont fixées des antennes, et des parois 22, généralement en nid d'abeille. Des tuyères, non-représentées sur la figure 2, permettent de maintenir le satellite à poste et de le stabiliser.

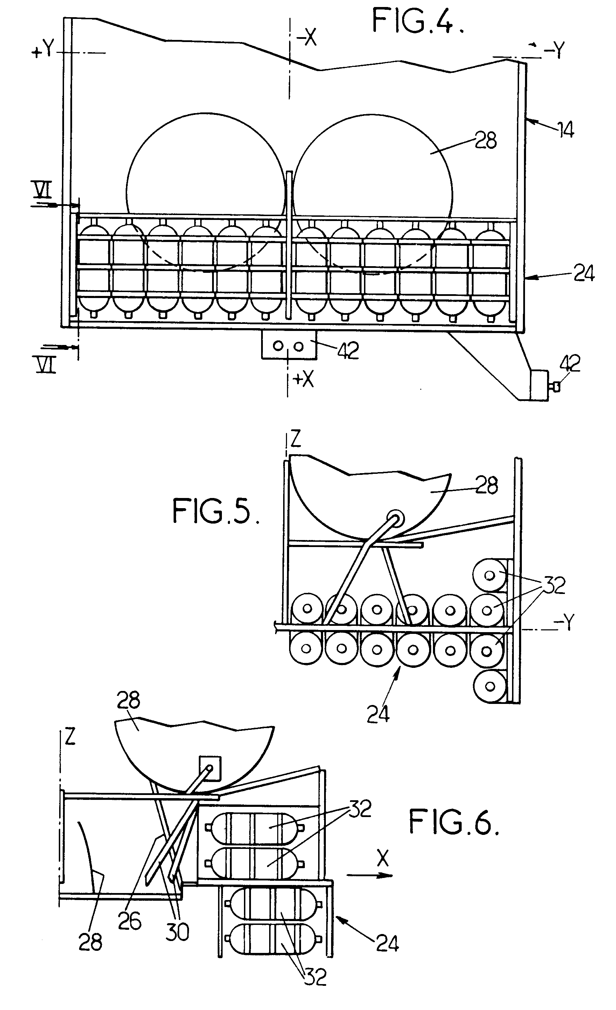

Dans le mode de réalisation montré sur les figures 3 à 6, la structure 14 du satellite est destinée à être reliée à l'adaptateur d'une fusée de mise sur orbite de transfert par un cône 26 (figure 6) entourant la tuyère 28 d'un moteur d'apogée alimentable, comme les tuyères de maintien à poste, par des réservoirs d'ergol 28. Le poids de ces réservoirs est transféré au cône par des biellettes 30.

Toujours dans le cas des figures 3 à 6, la structure 14 est prévue pour recevoir deux modules d'accumulateur 24 placés symétriquement par rapport au plan médian YZ. Chaque module comporte un châssis formé par une semelle 31, qui sera habituellement constitué d'une pièce usinée ou d'un panneau en nid d'abeilles, s'étendant sur toute la largeur du satellite dans la direction Y et de flancs 33 (figure 3), généralement constitués de panneaux en nid d'abeilles. Lorsque le module est monté, ces flancs prolongent les parois ou murs Nord et Sud à l'opposé de la terre, en laissant ainsi la face tournée vers la terre libre pour recevoir des charges utiles. Les accumulateurs sont constitués par des cellules 32 de forme générale cylindrique. Dans le mode de réalisation des figures 3 à 6, elles sont fixées à plat des deux côtés de la semelle et contre la face intérieure des flancs.

Cette constitution permet de fixer le châssis de façon robuste et sans porte-à-faux. En effet les flancs 33 peuvent être munis de brides 34 de fixation sur les murs Nord et Sud. La semelle peut être munie de pattes 36 de fixation sur un plateau appartenant à la structure, situé dans un plan XY. La semelle peut être de plus munie d'équerres 38 de fixation sur les murs Est et Ouest (directions X et -X). Il est même possible de prévoir une liaison supplémentaire entre la structure et la semelle 31 à l'aide d'une cloison de séparation s'appuyant sur la ligne médiane 40 indiquée en tirets sur la figure 3.

Comme on le voit sur la figure 4, le montage des modules ne gêne pas l'installation de tuyères 42 de maintien à poste.

On voit par ailleurs que chacun des modules peut être mis en place sur le satellite alors que celui-ci est déjà assemblé et même éventuellement avec les générateurs solaires repliés sur chacune des parois en configuration de lancement. Il suffit en effet d'accéder au bord du satellite dans la direction -Z pour effectuer le montage. Les connexions électriques peuvent être en totalité effectuées par jonction d'un connecteur porté par le module avec un connecteur porté par la structure du satellite.

Les flancs 33 peuvent constituer des radiateurs. Dans ce cas, les flancs sont réalisés de façon traditionnelle par des panneaux en nid d'abeilles et portent un revêtement rayonnant et réfléchissant, tel qu'une peinture, un miroir ou un film de polytétra-fluoréthylène ou de polyimide dit "Kapton" avec une surface métallique réfléchissante.

Un chemin de fuite thermique doit être aménagé entre la paroi des cellules et les radiateurs. Ce chemin peut avoir une nature très variable. Il peut être constitué par une simple tresse fixée aux flancs, lorsque ces derniers sont réflecteurs, et plaquée contre la paroi des cellules. Il peut également être constitué par un ou plusieurs caloducs, reliant des plaques constituant réflecteurs, ensemble et avec la paroi des cellules.

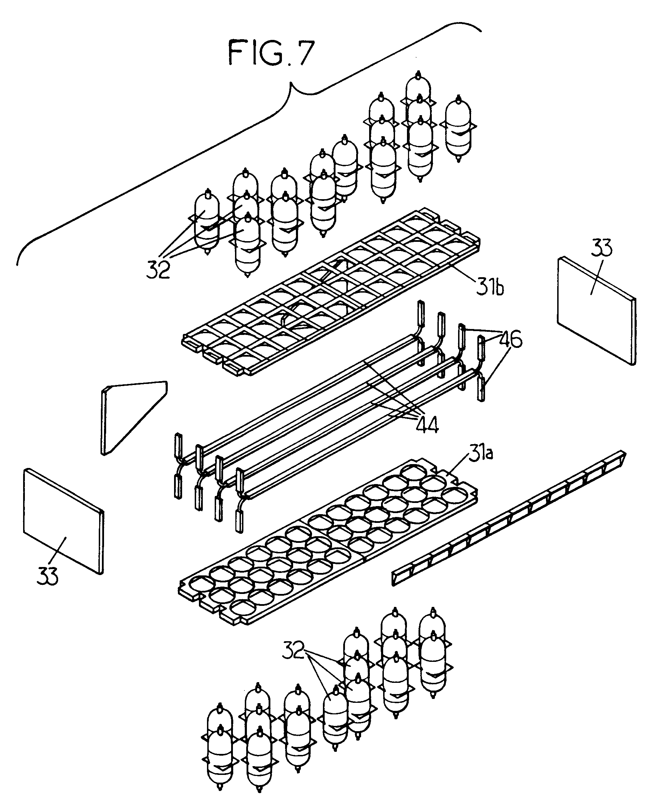

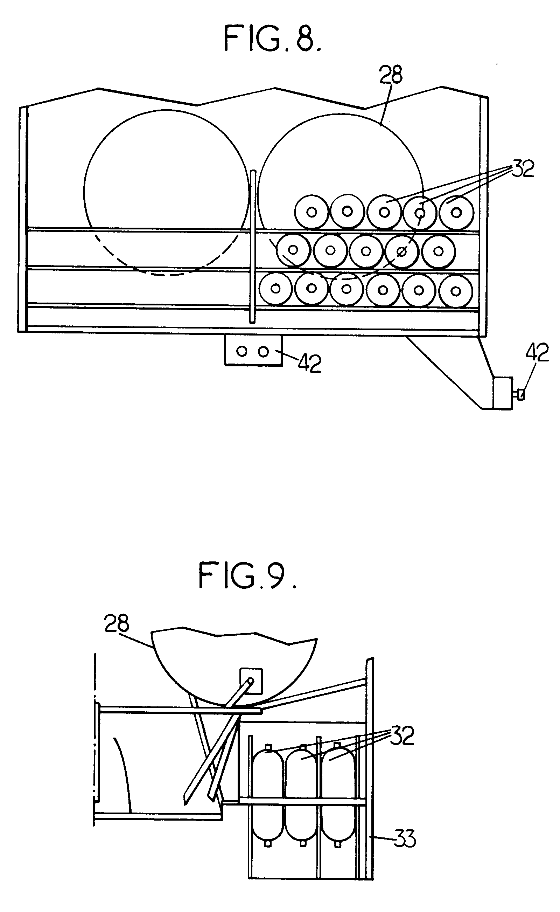

Le mode de réalisation montré en figures 7 à 9 (où les éléments correspondant à ceux des figures 2 à 6 portent le même numéro de référence) se différencie du précédent en ce que les cellules sont disposées perpendiculairement à la semelle qu'elles traversent. Cette semelle est elle-même constituée de deux plaques perforées 31a et 31b permettant d'immobiliser les cellules par pincement de collerettes dont elles sont munies. Le chemin de flux thermique peut alors être constitué par des caloducs 44 placés entre les plaques constitutives de la semelle, prolongés par des raccords 46 venant se fixer à plat sur la face interne des flancs 33.

Le châssis peut encore être fixé de façon rigide à la structure du satellite à l'aide de goussets rapportés.

## Revendications

1. Satellite ayant une charge utile, destiné à être stabilisé à poste autour de trois axes sur une orbite géostationnaire, comportant une structure qui a des parois faisant face au Nord et au Sud lorsque le satellite est à poste et qui porte au moins une batterie d'accumulateurs,
caractérisé en ce que la batterie, ou chaque batterie d'accumulateurs (24) est constituée de cellules (32) montées sur un châssis ayant une semelle (31) orientée Nord-Sud et solidaire mécaniquement de flancs (33) faisant face au Nord et au Sud lorsque le satellite est à poste, lesdits flancs (33) portant ou constituant des radiateurs thermiques reliés thermiquement entre eux et avec les cellules (32).

2. Satellite suivant la revendication 1, caractérisé en ce que lesdits flancs prolongent les faces Nord et Sud de la structure, à l'opposé de la terre.

3. Satellite suivant la revendication 1 ou 2, caractérisé en ce que les radiateurs sont reliés par des chemins de fuite thermique en contact avec les cellules, tels que des tresses ou caloducs.

4. Satellite suivant la revendication 1, 2 ou 3, caractérisé en ce que le châssis est muni de moyens de fixation sur plusieurs parois d'orientation différente de la structure du satellite.

5. Satellite suivant la revendication 4, caractérisé en ce que les flancs (33) sont munis de brides (34) de fixation sur les parois Nord et Sud et en ce que la semelle est munie de pattes (36) de fixation sur un plateau situé dans un plan parallèle aux directions Nord-Sud et Est-Ouest et d'équerres (38) de fixation sur des parois Est et Ouest.

6. Satellite suivant l'une quelconque des revendications précédentes, caractérisé en ce que les moyens de fixation sur la structure sont placés de façon à autoriser le montage alors que le satellite est en configuration de lancement.

7. Satellite suivant l'une quelconque des revendications 1 à 6, caractérisé en ce que les radiateurs sont constitués par des plaques à coefficient de rayonnement élevé portées par les flancs ou les constituant, pouvant avoir un revêtement rayonnant et réfléchissant.

8. Satellite suivant l'une quelconque des revendications précédentes, caractérisé en ce qu'il comporte deux batteries d'accumulateurs disposées symétriquement par rapport à un plan médian de la structure.

9. Satellite suivant l'une quelconque des revendications précédentes, caractérisé en ce que chaque batterie d'accumulateurs est constituée de cellules de forme générale cylindrique, disposées orthogonalement à la semelle, traversant la semelle et fixées à elle.

## Claims

1. Satellite having a payload, intended to be stabilized on station about three axes on a geostationary orbit, comprising a structure which has walls which face North and South when the satellite is on station and which carries at least one storage cells,
characterized in that the storage battery, or each storage battery, (24) is constituted by cells (32) mounted on a chassis having a base plate (31) oriented North-South, mechanically secured to sides (33) that face North and South when the satellite is on station, said sides (33) carrying or constituting thermal radiators that are thermally connected to each other and to the cells (32).

2. Satellite according to claim 1, characterized in that said sides are in alignment with the North and South walls and extend away from the Earth.

3. Satellite according to claim 1 or 2, characterized in that the radiators are connected by thermal leak paths in contact with the cells, such as braids or heat pipes.

4. Satellite according to claim 1, 2 or 3, characterized in that the chassis is provided with means for connection on a plurality of walls having different angular positions of the satellite structure.

5. Satellite according to claim 4, characterized in that the sides (33) are provided with flanges (44) for connection with the North and South sides and in that the base plate is provided with tabs (36) for connection with a plate which is located in a plane which is parallel to the North-South direction and East-West direction and with brackets (38) for connection on the East and West sides.

6. Satellite according to any one of the preceding claims, characterized in that the means for connection with the structure are so located as to enable mounting while the satellite is in launching condition.

7. Satellite according to any one of claims 1-6, characterized in that the radiators are constituted by plates having a high radiating coefficient carried by the sides or constituting the sides, which possibly have a radiating and reflecting coating.

8. Satellite according to any one of the preceding claims, characterized in that it comprises two storage batteries which are disposed symmetrically with respect to a midplane of the structure.

9. Satellite according to any one of the preceding claims, characterized in that each storage battery is constituted by cells of generally cylindrical shape, located orthogonally to the base plate, traversing the base plate and fixed to the base plate.

## Patentansprüche

1. Satellit mit einer Nutzlast und bestimmt, um in einer Stellung um die drei Achsen auf einer geostationären Umlaufbahn stabilisiert zu werden, wobei der Satellit eine Struktur aufweist, welche Wände hat, die dem Norden und Süden gegenüberliegen, wenn der Satellit in seiner Stellung ist, und welche wenigstens eine Akkumulatorbatterie trägt,
dadurch gekennzeichnet,
daß die oder jede Akkumulatorbatterie (24) von Zellen (32) gebildet ist, die auf einem Chassis angeordnet sind, welches eine Grundplatte (31) aufweist, die in Nord-Süd-Richtung orientiert ist und mechanisch fest mit Seiten (33) verbunden ist, die dem Norden und Süden gegenüberliegen, während der Satellit sich in Stellung befindet, wobei die Seiten (33) thermische Radiatoren tragen oder bilden, die unter sich und mit den Zellen (32) thermisch verbunden sind.

2. Satellit nach Anspruch 1,
dadurch gekennzeichnet,
daß die Seiten die Nord- und Süd-Flächen der Struktur entgegengesetzt zur Erde verlängern.

3. Satellit nach Anspruch 1 oder 2,
dadurch gekennzeichnet,
daß die Radiatoren in Kontakt mit den Zellen durch Wege thermischer Streuung verbunden sind, wie Beflechtungen oder Wärmeleitungen.

4. Satellit nach Anspruch 1, 2 oder 3,
dadurch gekennzeichnet,
daß das Chassis mit Mitteln zur Befestigung auf mehreren Wänden verschiedener Orientation der Struktur des Satelliten versehen ist.

5. Satellit nach Anspruch 4,
dadurch gekennzeichnet,
daß die Seiten (33) mit Flanschen (34) zur Befestigung auf den Nord- und Süd-Wänden versehen sind, und daß die Grundplatte mit Laschen (36) zur Befestigung auf einer Scheibe, die in einer Ebene parallel zu den Nord-Süd- und den Ost-West-Richtungen gelegen ist, und mit Winkelstücken (38) zur Befestigung auf den Ost- und West-Wänden versehen ist.

6. Satellit nach irgendeinem der vorangehenden Ansprüche,
dadurch gekennzeichnet,
daß die Mittel zur Befestigung auf der Struktur derart angeordnet sind, daß die Montage möglich ist, während der Satellit sich in seiner Abschußkonfiguration befindet.

7. Satellit nach irgendeinem der Ansprüche 1 bis 6,
dadurch gekennzeichnet,
daß die Radiatoren von Platten mit einem erhöhten Strahlungskoeffizienten gebildet sind, welche von den Seiten getragen werden oder diese bilden und eine strahlende und reflektierende Beschichtung haben können.

8. Satellit nach irgendeinem der vorangehenden Ansprüche,
dadurch gekennzeichnet,
daß dieser zwei Akkumulatorbatterien aufweist, die symmetrisch im Verhältnis zu einer Mittelebene der Struktur angeordnet sind.

9. Satellit nach irgendeinem der vorangehenden Ansprüche,
dadurch gekennzeichnet,
daß jede Akkumulatorbatterie von Zellen von im wesentlichen zylindrischer Form gebildet sind, welche rechtwinklig zur Grundplatte angeordnet sind, die Grundplatte durchdringen und an dieser befestigt sind.
